# EUROPÄISCHE PATENTSCHRIFT

(11) **EP 3 097 827 B1**
(45) Veröffentlichungstag und Bekanntmachung des Hinweises auf die Patenterteilung: **01.04.2020**
(21) Anmeldenummer: 16168224.0
(22) Anmeldetag: 04.05.2016
(51) Int. Cl.: A47J 31/46, A47J 31/52

(54) **HEISSGETRÄNKEZUBEREITUNGSVORRICHTUNG, INSBESONDERE KAFFEEVOLLAUTOMAT, UND VERFAHREN ZU IHREM BETRIEB**
HOT BEVERAGE PREPARATION DEVICE, IN PARTICULAR A FULLY AUTOMATIC COFFEE MAKER, AND METHOD OF OPERATING THE SAME
DISPOSITIF DE PRÉPARATION DE BOISSONS CHAUDES, EN PARTICULIER MACHINE À CAFÉ ENTIÈREMENT AUTOMATIQUE ET PROCÉDÉ DE FONCTIONNEMENT

(30) Priorität: 29.05.2015 DE 102015209990
(43) Veröffentlichungstag der Anmeldung: 30.11.2016
(73) Patentinhaber: BSH Hausgeräte GmbH, 81739 München (DE)
(72) Erfinder: Fisch, Markus, 84326 Falkenberg (DE); Baumgart, Stefan, 83308 Trostberg (DE)

(56) Entgegenhaltungen:
- WO-A1-2007/002575
- WO-A1-2015/140688
- DE-A1-102007 053 253

## Beschreibung

Die Erfindung betrifft eine Heißgetränkezubereitungsvorrichtung, insbesondere einen Kaffeevollautomaten, mit welchem insbesondere Heißgetränke oder heiße flüssige Lebensmittel, wie beispielsweise Kaffee, Tee, heiße Milch, Kakaogetränke oder auch Suppen zubereitet werden können. Ferner betrifft die vorliegende Erfindung ein entsprechendes Verfahren zum Betreiben einer Heißgetränkezubereitungsvorrichtung.

Nachfolgend werden die Begriffe "Heißgetränkezubereitungsvorrichtung", "Kaffeevollautomat" und "Zubereitungsvorrichtung" gleichbedeutend benutzt, so dass einer dieser Begriffe stets die anderen beinhaltet und sie daher gegeneinander austauschbar sind.

Die DE 44 20 629 A1 zeigt ein Verfahren, bei welchem ein lineares Verhältnis zwischen der Stromaufnahme der Pumpe und dem durch die Pumpe erzeugten Druck in dem Kaffeevollautomaten als Basis für eine Druckberechnung angenommen wird. Das Verfahren liefert aber auf Grund der hohen Streuung der eingesetzten Pumpen und den nichtlinearen Faktoren in dem Gesamtsystem nur unzureichende Ergebnisse für eine exakte Steuerung des Kaffeevollautomaten. Um den Einfluss einer solch hohen Streuung eingesetzter Pumpen zu reduzieren, schlägt die WO-A-2007/002575 vor, für jede Pumpe durch eine Kalibrierung einen speziellen Operationsindex zu bestimmen. Im Betrieb einer solchen Pumpe können anschließend aus der Betriebszeit der Pumpe, den Werten eines Drucksensors und dem Operationsindex genauere Ergebnisse für eine Steuerung erreicht werden.

Aus der DE-A-10 2007 053253 ist es bekannt, die von einer Pumpe geförderte Wassermenge mit einem separaten Durchflusssensor zu messen.

Dazu ist aus der nachveröffentlichten WO-A-2015/140688 ein Getränkebereiter mit einer Steuerungseinrichtung bekannt, die eine Drehzahl eines Pumpenmotors erfasst und aus einem angenommenen linearen Zusammenhang zwischen einer Bewegungsgeschwindigkeit des Pumpenmotors und der geförderten Flüssigkeitsmenge eine Durchflussrate ermittelt.

Aufgabe der vorliegenden Erfindung ist es daher, eine Heißgetränkezubereitungsvorrichtung mit einer verbesserten Ansteuerung bereitzustellen.

Diese Aufgabe wird erfindungsgemäß durch eine Heißgetränkezubereitungsvorrichtung mit den Merkmalen des unabhängigen Patentanspruchs 1 und ein Verfahren mit den Merkmalen des unabhängigen Patentanspruchs 9 gelöst.

Demgemäß ist eine Heißgetränkezubereitungsvorrichtung vorgesehen mit einer Pumpe, welche einen elektrischen Pumpenmotor aufweist und dazu ausgebildet ist, in der Heißgetränkezubereitungsvorrichtung eine Flüssigkeit zu pumpen, mit einem Sensor, welcher dazu ausgebildet ist, eine Betriebsgröße des elektrischen Pumpenmotors zu messen, welche eine Aussage über den von der Pumpe erzeugten Flüssigkeitsfluss ermöglicht, und mit einer Steuereinrichtung, welche mit dem elektrischen Pumpenmotor und dem Sensor gekoppelt ist und welche dazu ausgebildet ist, den Flüssigkeitsfluss basierend auf der erfassten Betriebsgröße zu berechnen und den elektrischen Pumpenmotor basierend auf dem berechneten Flüssigkeitsfluss zu steuern.

Das erfindungsgemäße Verfahren zum Betreiben einer Heißgetränkezubereitungsvorrichtung mit einer Pumpe, welche einen elektrischen Pumpenmotor aufweist, umfasst die Schritte
- Pumpen von Flüssigkeit in der Heißgetränkezubereitungsvorrichtung mittels der Pumpe;
- Erfassen einer Betriebsgröße des elektrischen Pumpenmotors, welche eine Aussage über die von der Pumpe bewegte Flüssigkeitsmenge ermöglicht, durch einen Leistungssensor als Sensor, welcher dazu ausgebildet ist, die durch den elektrischen Pumpenmotor aufgenommene elektrische Leistung durch eine PWM- und eine Strommessung zu messen, oder durch einen Drehzahlsensor als Sensor, welcher dazu ausgebildet ist, die Drehzahl des elektrischen Pumpenmotors basierend auf einem PWM-Tastverhältnis einer Steuerspannung des elektrischen Pumpenmotors zu erfassen;
- Berechnen des Flüssigkeitsflusses basierend auf der erfassten Betriebsgröße; und
- Steuern des elektrischen Pumpenmotors basierend auf dem berechneten Flüssigkeitsfluss.

Die Heißgetränkezubereitungsvorrichtung kann eine Kapselmaschine oder insbesondere ein Kaffeevollautomat sein. Sie besitzt regelmäßig eine Pumpe mit einem elektrischen Pumpenmotor zur Förderung von Zubereitungswasser. Als Pumpen kommen Schwingkolbenpumpen, Zahnradpumpen, Membranpumpen oder dergleichen zum Einsatz. Der elektrische Pumpenmotor kann also jeder elektrisch betriebene Pumpenantrieb sein.

Schwingkolbenpumpen erzeugen bei einer Halbwelle der elektrischen Versorgungsspannung einen Druck und dadurch einen Flüssigkeitsfluss in der Zubereitungsvorrichtung. Bauartbedingt weisen Schwingkolbenpumpen große Toleranzen im Wirkungsgrad und damit auch im Druck-Fluss-Verhältnis auf. Zur Erfassung einer elektrischen Betriebsgröße des elektrischen Pumpenmotors kann als Sensor ein Strom- oder Spannungssensor oder dergleichen vorgesehen sein. Als elektrische Betriebsgröße kann z.B. die Versorgungsspannung des elektrischen Pumpenmotors, der von dem elektrischen Pumpenmotor aufgenommene Strom oder die elektrische Leistung dienen, welche der elektrische Pumpenmotor aufnimmt.

Der vorliegenden Erfindung liegt die Erkenntnis zugrunde, dass es möglich ist, durch die elektrische Betriebsgröße auf die durch die Pumpe bewegte Flüssigkeitsmenge bzw. den Flüssigkeitsfluss zu schließen. Die Erfindung nutzt diese Erkenntnis, um eine Heißgetränkezubereitungsvorrichtung bereitzustellen, bei welcher der Flüssigkeitsfluss aus der Betriebsgröße des Pumpenmotors berechnet wird und die Steuerung der Pumpe basierend auf dem berechneten Flüssigkeitsfluss durchgeführt wird.

Erfindungsgemäß können mit einem einfachen Sensor, der z.B. einen Strom oder eine Spannung erfasst, und damit ohne einen aufwändigen Drucksensor, die Pumpe und damit die Flüssigkeitsverhältnisse in der Heißgetränkezubereitungsvorrichtung sehr exakt gesteuert werden. Auch können weitere elektrische Verbraucher der Zubereitungseinrichtung, wie z.B. eine Heizung oder dergleichen, in Kenntnis des berechneten Flüssigkeitsflusses exakter gesteuert bzw. geregelt werden.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen einer anderen Anspruchskategorie weitergebildet sein können und die Merkmale verschiedener Ausführungsbeispiele zu neuen Ausführungsbeispielen kombiniert werden können.

Erfindungsgemäß weist die Heißgetränkezubereitungsvorrichtung einen Leistungssensor als Sensor auf, welcher dazu ausgebildet ist, die durch den elektrischen Pumpenmotor aufgenommene elektrische Leistung zu messen. Die elektrische Leistung ist eine Betriebsgröße des elektrischen Pumpenmotors, die einen einfachen Rückschluss auf den Flüssigkeitsfluss zulässt. Der Leistungssensor führt erfindungsgemäß eine PWM- und eine Strommessung durch.

Alternativ zum Leistungssensor weist die erfindungsgemäße Heißgetränkezubereitungsvorrichtung einen Drehzahlsensor als Sensor auf, welcher die Drehzahl des elektrischen Pumpenmotors erfasst. Auch die Drehzahl ist eine Betriebsgröße des elektrischen Pumpenmotors, die einen einfachen Rückschluss auf den Flüssigkeitsfluss zulässt. Der Drehzahlsensor erfasst die Drehzahl der Pumpe basierend auf einem PWM-Tastverhältnis einer Steuerspannung des elektrischen Pumpenmotors.

In einer weiteren vorteilhaften Ausführungsform kann die Steuereinrichtung einen Kennwertspeicher aufweisen, welcher erste Kennwerte und/oder erste Kennlinien aufweist. Sie setzen die erfasste Betriebsgröße zu dem Flüssigkeitsfluss in der Heißgetränkezubereitungsvorrichtung in Beziehung. Die ersten Kennwerte bzw. ersten Kennlinien können dabei für die unterschiedlichen Betriebszustände der Heißgetränkezubereitungsvorrichtung separat bereitgestellt werden und alle Faktoren berücksichtigen, welche den Zusammenhang zwischen der erfassten Betriebsgröße und dem Flüssigkeitsfluss, wie z.B. Temperatur, Mechanik der Pumpe, Wirkungsgrad des elektrischen Pumpenmotors bzw. der Pumpe und dergleichen, beeinflussen können. Dies ermöglicht eine besonders einfache Berechnung des Flüssigkeitsflusses aus der erfassten Betriebsgröße. Die Kennwerte bzw. Kennlinien können z.B. in entsprechenden Tabellen abgelegt bzw. gespeichert werden, die einem Eingangswert jeweils einen Ausgangswert, einen Befehl oder eine Stellgröße, z.B. für den elektrischen Pumpenmotor, zuordnen. Kennwerte bzw. Kennlinien können auch aus Funktionen berechnet werden, die in dem Kennwertspeicher abgelegt sind. Ihre Berechnung kann das jeweilige Ergebnis als Ausgangswert bzw. Stellgröße liefern.

In einer weiteren vorteilhaften Ausführungsform können die ersten Kennwerte und/oder ersten Kennlinien werkseitig während der Entwicklung bzw. Produktion eines Modells bzw. einer Serie einer Heißgetränkezubereitungsvorrichtung bzw. einzelner Baugruppen des Modells oder der Serie bestimmt werden. Beispielsweise wird bei einem Leerlauf, also einem Flüssigkeitsfluss von null, oder einem oder weiteren anderen vorgegebenen Wert(en), der von dem elektrischen Pumpenmotor aufgenommene Strom erfasst. Aus diesem Wert können die ersten Kennwerte und/oder ersten Kennlinien berechnet werden und in dem Kennwertspeicher gespeichert werden. Die ersten Kennwerte und/oder ersten Kennlinien können auch modellbasiert bestimmt werden. Die ersten Kennwerte und/oder ersten Kennlinien können dann z.B. in einem Parametrierungsschritt werkseitig in dem Kennwertspeicher abgelegt werden.

In einer weiteren vorteilhaften Ausführungsform kann die Steuereinrichtung basierend auf der erfassten Betriebsgröße und den ersten Kennwerten und/oder den ersten Kennlinien den Flüssigkeitsfluss in der Pumpe bestimmen. Der Wert für den Flüssigkeitsfluss kann z.B. genutzt werden, um einen Benutzer der Heißgetränkezubereitungsvorrichtung auf einen niedrigen Wasserstand in der Heißgetränkezubereitungsvorrichtung hinzuweisen. Liegt die Menge an Flüssigkeit in der Pumpe unter einem vorgegebenen Schwellwert, kann die Steuereinrichtung zusätzlich ein akustisches oder optisches Warnsignal für einen Benutzer der Heißgetränkezubereitungsvorrichtung ausgeben. Zusätzlich oder alternativ kann sie auch ein internes Signal in der Steuereinrichtung erzeugen, welches kennzeichnet, dass zu wenig Flüssigkeit, z.B. Wasser, zur Verfügung steht, um ein Getränk zuzubereiten. Liegt die Menge an Flüssigkeit in der Pumpe unter dem vorgegebenen Schwellwert, kann die Steuereinrichtung daraufhin elektrische Verbraucher, wie z.B. eine Heizung der Heißgetränkezubereitungsvorrichtung, deaktivieren, um zu verhindern, dass sie Schaden nehmen, beispielsweise die Heizung überhitzt.

In einer weiteren vorteilhaften Ausführungsform kann die Steuereinrichtung basierend auf dem Flüssigkeitsfluss in der Heißgetränkezubereitungsvorrichtung den Druck berechnen und den Zubereitungsvorgang, insbesondere Zubereitungszeiten und weitere Zubereitungsparameter für eine Getränkezubereitung, basierend auf dem berechneten Druck steuern. Da der Druck eine wichtige Größe bei der Zubereitung z.B. von Espresso ist, kann mit Hilfe des berechneten Drucks der Brühvorgang für einen solchen Espresso, aber auch für die übrigen kaffeebasierten Getränke optimiert werden.

In einer weiteren vorteilhaften Ausführungsform kann die Steuereinrichtung basierend auf einem Modell der Heißgetränkezubereitungsvorrichtung und der durch den elektrischen Pumpenmotor aufgenommenen elektrischen Leistung und insbesondere auf zweiten Kennwerten und/oder zweiten Kennlinien einen theoretischen Systemfluss in der Heißgetränkezubereitungsvorrichtung berechnen. Alternativ kann die Steuereinrichtung statt der durch den elektrischen Pumpenmotor aufgenommenen elektrischen Leistung die Drehzahl des elektrischen Pumpenmotors für die Berechnungen nutzen. Ferner kann die Recheneinrichtung basierend auf der Differenz zwischen dem theoretischen Systemfluss und dem bestimmten Flüssigkeitsfluss den Druck in der Heißgetränkezubereitungsvorrichtung berechnen.

Zwischen der Leistung des elektrischen Pumpenmotors und der Drehzahl des elektrischen Pumpenmotors sowie zwischen der Drehzahl des elektrischen Pumpenmotors und dem Flüssigkeitsfluss in der Pumpe sind Störgrößen vorhanden, die von dem System, also der Heißgetränkezubereitungsvorrichtung und dem Gegendruck in dem System abhängig sind. Die von dem System abhängigen Störgrößen können durch eine Modellbildung erfasst und damit aus den Berechnungen eliminiert werden. Folglich kann aus dem Unterschied zwischen dem theoretischen Flüssigkeitsfluss und dem tatsächlichen Flüssigkeitsfluss auf den Gegendruck bzw. den Druck im System geschlossen werden.

In einer weiteren vorteilhaften Ausführungsform kann die Steuereinrichtung basierend auf einem Modell der Heißgetränkezubereitungsvorrichtung und dem bestimmten Flüssigkeitsfluss in der Heißgetränkezubereitungsvorrichtung eine theoretische Drehzahl und/oder eine theoretische elektrische Leistung des elektrischen Pumpenmotors berechnen. Ferner kann die Steuereinrichtung basierend auf der Differenz der theoretischen Drehzahl und der gemessenen Drehzahl und/oder der Differenz der theoretischen elektrischen Leistung und der gemessenen elektrischen Leistung des elektrischen Pumpenmotors den Druck in der Heißgetränkezubereitungsvorrichtung berechnen. Dies stellt eine Alternative zu der zuletzt genannten Berechnungsmethode dar, bei welcher die Leistungsdifferenz zwischen einer theoretischen und einer tatsächlichen elektrische Leistung des elektrischen Pumpenmotors als Basis für die Berechnungen dient.

Das Prinzip der Erfindung wird im Folgenden anhand einer Zeichnung beispielshalber noch näher erläutert. In der Zeichnung zeigen:
- Figur 1:: eine schematische Darstellung einer Ausführungsform der erfindungsgemäßen Heißgetränkezubereitungsvorrichtung,
- Figur 2:: ein Ablaufdiagramm einer Ausführungsform des erfindungsgemäßen Verfahrens,
- Figur 3:: ein Ablaufdiagramm eines Ausschnitts zum Berechnen des Drucks in einer Ausführungsform des erfindungsgemäßen Verfahrens, und
- Figur 4:: ein Ablaufdiagramm zu einer alternativen Berechnung des Drucks.

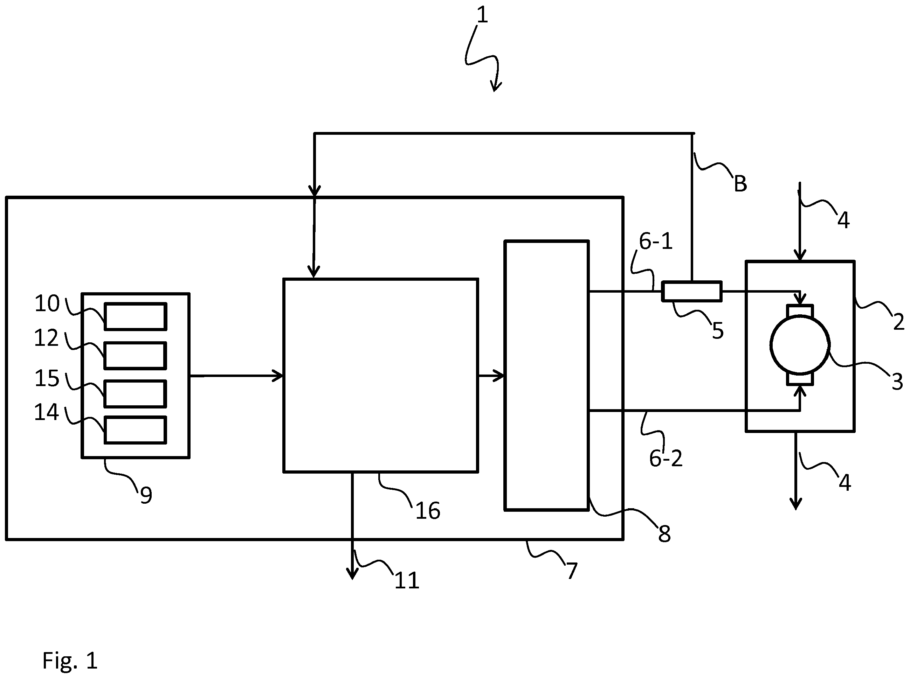

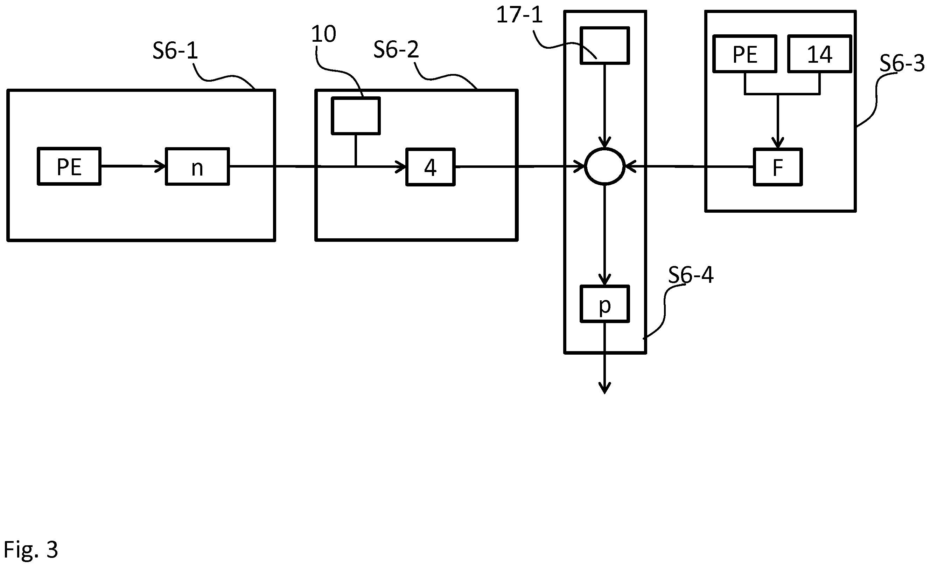

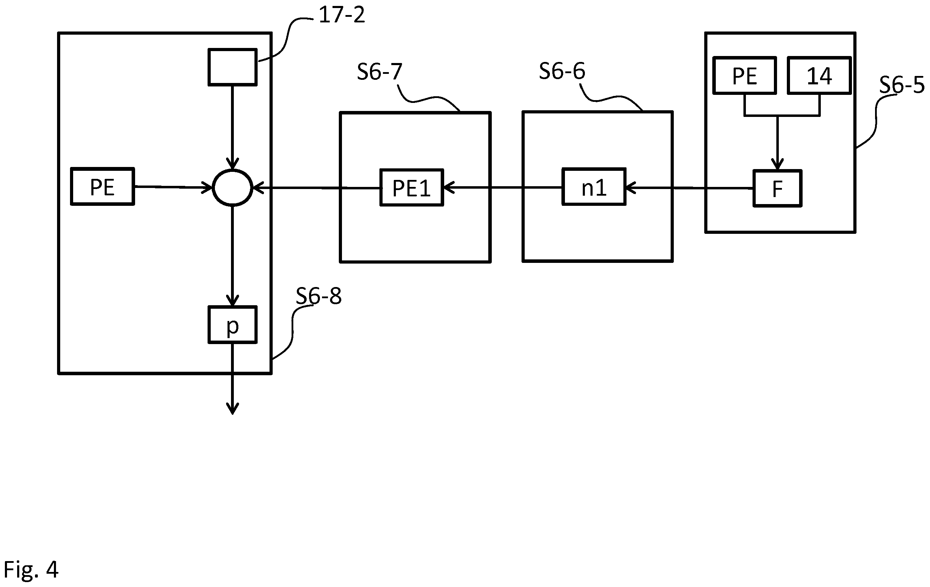

Die Heißgetränkezubereitungsvorrichtung 1 der Figur 1 weist eine Pumpe 2 mit einem elektrischen Pumpenmotor 3 auf, die eine Flüssigkeit, in der Regel Wasser, in der Zubereitungsvorrichtung 1 pumpt. Den elektrischen Pumpenmotor 3 steuert eine Steuereinrichtung 7 über eine positive Versorgungsleitung 6-1 und eine negative Versorgungsleitung 6-2 an. Dazu erfasst ein Sensor 5 in der positiven Versorgungsleitung 6-1 eine Betriebsgröße B des elektrischen Pumpenmotors 3 und stellt der Steuereinrichtung 7 einen Wert bereit, der die Betriebsgröße B kennzeichnet. Beispielsweise kann der Sensor 5 eine elektrische Leistung PE (siehe Figuren 3 und 4) erfassen, die der elektrische Pumpenmotor 3 aufnimmt. Alternativ kann der Sensor 5 ein Drehzahlsensor sein, der an der Welle des elektrischen Pumpenmotors 3 angebracht ist, um dessen Drehzahl n (siehe Figuren 3 und 4) zu erfassen.

Die Steuereinrichtung 7 weist ferner einen Kennwertspeicher 9 auf, der erste Kennwerte bzw. erste Kennlinien 10, zweite Kennwerte bzw. zweite Kennlinien 15, einen vorgegebenen Schwellwert 12 und ein Modell 14 der Zubereitungsvorrichtung 1 enthält.

Zur Erfassung der elektrischen Leistung PE in dem elektrischen Pumpenmotor 3 bestimmt der Sensor 5 aus einem PWM-Zyklus der Steuerspannung des elektrischen Pumpenmotors 3 und einer Strommessung die elektrische Leistung PE, die durch den elektrischen Pumpenmotor 3 aufgenommen wird.

Anhand der elektrischen Leistung PE und der ersten Kennwerte bzw. Kennlinien 10 kann die Steuereinrichtung 7 z.B. den Flüssigkeitsfluss 4 durch die Pumpe 2 bzw. die Zubereitungsvorrichtung 1, bestimmen und den elektrischen Pumpenmotor 3 entsprechend ansteuern. Eine Leistungselektronik 8 in der Steuereinrichtung 7 erzeugt dazu entsprechende Spannungen und Ströme auf den Versorgungsleitungen 6-1, 6-2.

Erkennt die Steuereinrichtung 7 z.B. einen sehr niedrigen Flüssigkeitsfluss 4 in der Pumpe 2, der unter dem Schwellwert 12 aus dem Speicher 9 liegt, deutet dies darauf hin, dass in der Zubereitungsvorrichtung 1 zu wenig Wasser vorhanden ist. Daraufhin beendet die Steuereinrichtung 7 nicht nur die Ansteuerung des elektrischen Pumpenmotors 3. Vielmehr steuert sie auch weitere elektrische Verbraucher, insbesondere eine Heizung der Zubereitungsvorrichtung 1, zeitlich präzise an. Ein Trockenlaufen und somit eine Überhitzung vor allem der Heizung kann so sehr effektiv verhindert werden. Der Wassermangel wird durch ein Warnsignal 11 angezeigt, z.B. durch ein akustisches Hinweissignal, welches einem Benutzer signalisiert, dass in der Heißgetränkezubereitungsvorrichtung 1 der Wasservorrat aufgefüllt werden muss.

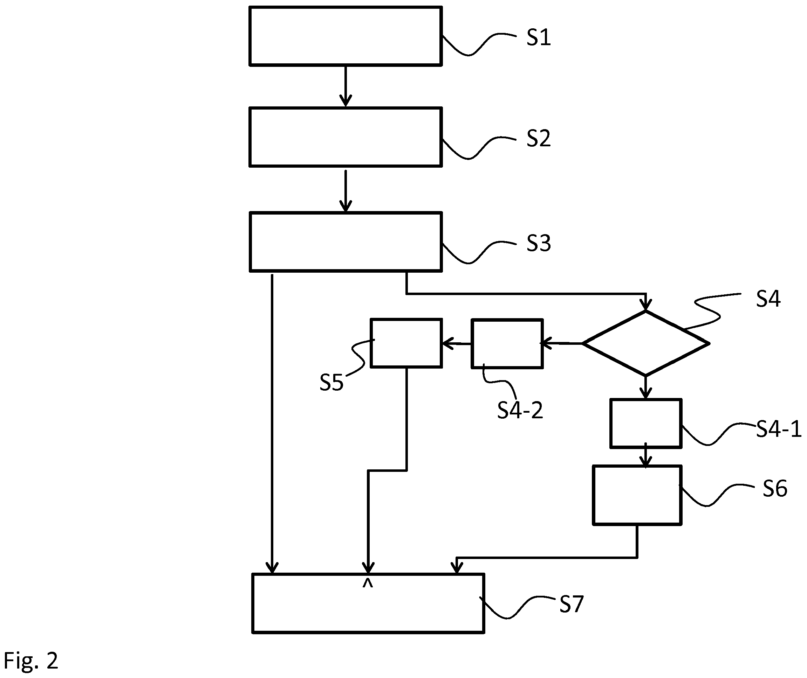

Die Steuereinrichtung 7 kann basierend auf der erfassten Betriebsgröße B weitere Systemgrößen der Zubereitungsvorrichtung 1 bestimmen. Beispielsweise kann sie basierend auf der elektrischen Leistung PE, welche der elektrische Pumpenmotor 3 aufnimmt, den zweite Kennwerten bzw. Kennlinien 15 und dem Modell 14 den Druck p (siehe Figuren 3 und 4) in der Zubereitungsvorrichtung 1 bestimmen und diesen regeln. Dies wird im Detail mit Bezug auf Figuren 2 bis 4 erläutert.

Ist der Druck p in der Zubereitungsvorrichtung 1 bekannt, kann die Zubereitung des Heißgetränks, z.B. eines Espresso, exakt geregelt werden. Beispielsweise können die Zubereitungszeit, die Wassertemperatur und dergleichen an den erfassten Druck p angepasst werden. Mit Hilfe der Erfindung wird dies möglich, ohne dezidierte Drucksensoren in der Zubereitungsvorrichtung 1 einzusetzen.

Die Erfindung ermöglicht ferner eine aktive Druckregelung in der Zubereitungsvorrichtung 1, da bei bekanntem Druck p z.B. durch ein Verringern des Stroms, welcher dem elektrischen Pumpenmotor 3 zugeführt wird, der Druck p in der Zubereitungsvorrichtung 1 reduziert werden kann. Ein bisher benötigtes Überdruckventil kann folglich entfallen.

Die oben genannten Berechnungen werden durch die Recheneinheit 16 in der Steuervorrichtung 1 ausgeführt, die z.B. ein programmgesteuerter Mikrocontroller, Prozessor oder dergleichen sein kann. Dabei kann die Recheneinheit 16 jede Ausführungsform des zu Figuren 2 bis 4 beschriebenen Verfahrens ausführen.

Die Steuereinrichtung 7 als Steuerung der Zubereitungsvorrichtung 1 führt auch die Ansteuerung ihrer weiteren Elemente aus. Dazu kann die Steuereinrichtung 7 z.B. eine Kombination aus Hardware, z.B. einem Mikroprozessor, Mikrocontroller oder dergleichen, und entsprechenden Schnittstellen aufweisen. Ferner kann auf der Hardware ein entsprechendes Programm ausgeführt werden, welches die oben genannten Funktionen bereitstellt.

Figur 2 zeigt einen erfindungsgemäßen Verfahrensablauf zum Betreiben der Zubereitungsvorrichtung 1. Das Verfahren sieht als Schritt S1 das Pumpen von Flüssigkeit in der Zubereitungsvorrichtung 1 mit der Pumpe 2 vor. Während des Betriebs ihres elektrischen Pumpenmotors 3 wird in einem Schritt S2 eine elektrische Betriebsgröße B des elektrischen Pumpenmotors 3, z.B. ein durch den Pumpenmotor 3 fließender Strom oder eine Versorgungsspannung bzw. eine Versorgungsleistung des Pumpenmotors 3, erfasst, welche eine Aussage über den von der Pumpe 2 bewegten Flüssigkeitsfluss 4 ermöglicht. Basierend auf der erfassten Betriebsgröße B wird in einem Schritt S3 der Flüssigkeitsfluss 4 berechnet. Wie oben bereits erläutert, können z.B. erste Kennwerte und/oder Kennlinien 10 dazu dienen, die erfasste Betriebsgröße B in Bezug zu dem Flüssigkeitsfluss 4 zu setzen. Die ersten Kennwerte und/oder Kennlinien 10 sind dabei für eine Vielzahl von Betriebszuständen und -temperaturen der Zubereitungsvorrichtung 1 im Speicher 9 hinterlegt.

Der elektrische Pumpenmotor 3 wird dann basierend auf dem berechneten Flüssigkeitsfluss 4 angesteuert. Dazu wird in einem Abfrageschritt S4 der berechnete Flüssigkeitsfluss 4 mit dem vorgegebenen Schwellwert 12 aus dem Speicher 9 (Figur 1) verglichen. Liegt er über dem Schwellwert 12, wird die Pumpe 2 in Schritt 4-1 unverändert weiterbetrieben. Wenn der Flüssigkeitsfluss 4 unter dem vorgegebenen Schwellwert 12 liegt, wird der elektrische Pumpenmotor 3 im Schritt S4-2 abgeschaltet. Ferner wird daraufhin in einem Schritt S5 ein Warnsignal 11 ausgebeben.

Zusätzlich wird der Druck p in der Zubereitungsvorrichtung 1 basierend auf dem Flüssigkeitsfluss 4 in einem Schritt S6 berechnet, und der Vorgang der Getränkezubereitung, z.B. Zubereitungszeiten und Zubereitungsparameter für die Getränkezubereitung, basierend auf dem berechneten Druck p in einem Schritt S7 gesteuert werden. Der Pfeil von Schritt S3 zu Schritt S7 zeigt, dass zum Einstellen der Zubereitungszeiten und Zubereitungsparameter nicht nur der Druck p, sondern auch der Flüssigkeitsfluss 4 als Eingangsgröße genutzt werden kann. Die Berechnung des Drucks p wird unten mit Bezug auf Figuren 3 und 4 näher erläutert. Der Schritt S7 wird aber nur ausgeführt, wenn in Schritt S5 kein Warnsignal 11 ausgegeben wurde. Dies ist durch eine Verbindung zwischen Schritt S5 und einem Schalteingang (mit "^" gekennzeichnet) des Schritts S7 gekennzeichnet.

Es versteht sich, dass die zu Figur 2 erläuterten Verfahrensschritte S1 bis S7 in der Recheneinheit 16 sequentiell oder auch zumindest teilweise parallel ausgeführt werden können. Dazu können die Verfahrensschritte S1 bis S7 z.B. auf unterschiedliche Tasks eines Betriebssystems der Recheneinheit 16 aufgeteilt werden.

Figur 3 zeigt eine erste Möglichkeit zum Berechnen des Drucks p (entspricht Schritt S6 der Fig. 2). Dazu wird in Schritt S6-1 aus der von dem elektrischen Pumpenmotor 3 erfassten elektrischen Leistung PE als Betriebsgröße B die Drehzahl n des elektrischen Pumpenmotors 3 berechnet. In realen Systemen bestehen zwischen der elektrischen Leistung PE und der Drehzahl n des elektrischen Pumpenmotors 3 Störgrößen. Ein Teil der Störgrößen ist dabei abhängig von dem Druck p in dem System der Heißgetränkezubereitungsvorrichtung 1. Die anderen Störgrößen sind von der Heißgetränkezubereitungsvorrichtung 1 selbst bzw. von ihren weiteren Komponenten abhängig. Sie kennzeichnen z.B. die Abhängigkeit der Drehzahl von der Erwärmung des elektrischen Pumpenmotors 3, von dem verwendeten Pumpensystem, von dem Wirkungsgrad der Pumpe 2 und dergleichen. Die Störgrößen, die von den Komponenten der Heißgetränkezubereitungsvorrichtung 1 abhängig sind, werden z.B. in einem oder mehreren Umrechnungsfaktor(en) zusammengefasst. Auf diese Art kann in Schritt S6-1 aus der erfassten elektrischen Leistung PE die Drehzahl n des elektrischen Pumpenmotors 3 durch eine einfache Umrechnung mit dem bzw. den Umrechnungsfaktor(en) berechnet werden.

Basierend auf der Drehzahl n des elektrischen Pumpenmotors 3 und den ersten Kennwerten 10 bzw. Kennlinien 10 wird in Schritt S6-2 der tatsächliche Flüssigkeitsfluss 4 berechnet. Z.B. können die Kennwerte 10 bzw. die Kennlinien 10 Umrechnungsfaktoren zur Multiplikation mit der Drehzahl n angeben.

Gleichzeitig wird in Schritt S6-3 basierend auf dem bereits erwähnten Modell 14 im Speicher 9 (Figur 1) der Zubereitungsvorrichtung 1 und der durch den elektrischen Pumpenmotor 3 aufgenommenen elektrischen Leistung PE ein theoretischer Systemfluss F für die Zubereitungsvorrichtung 1 berechnet. Beispielsweise kann das Modell 14 vorgegebene Rahmenbedingungen, wie z.B. einen vorgegebenen Gegendruck bei definierten Rahmenbedingungen in der Zubereitungsvorrichtung 1 oder dergleichen berücksichtigen. Die Rahmenbedingungen können z.B. eine Temperatur, ein Wasserfüllstand oder dergleichen der Zubereitungsvorrichtung 1 vorgeben.

Die Differenz zwischen dem tatsächlichen Flüssigkeitsfluss 4 und dem theoretischen Systemfluss F ist direkt von dem in der Zubereitungsvorrichtung 1 tatsächlich vorhandenen Gegendruck bzw. Druck p abhängig. Mit einem vorgegebenen Umrechnungs- oder Multiplikationsfaktor 17-1 bzw. einer Kennlinie 17-1 wird in Schritt S6-4 folglich aus der Differenz zwischen dem tatsächlichen Flüssigkeitsfluss 4 und dem theoretischen Systemfluss F der Druck p berechnet.

Eine weitere, zweite Möglichkeit, den Druck p zu berechnen, zeigt Figur 4 . Die Berechnung des Drucks p erfolgt basierend auf einer Differenz zwischen einer theoretischen elektrischen Leistung PE1 des Pumpenmotors 3 und der erfassten elektrischen Leistung PE in Schritt S6-8. Um die theoretische elektrische Leistung PE1 berechnen zu können, wird in Schritt S6-5 analog zum Schritt S6-3 basierend auf der aufgenommenen elektrischen Leistung PE und dem Modell 14 ein theoretischer Systemfluss F berechnet. Aus ihm wird in Schritt S6-6 eine theoretische Motordrehzahl n1 berechnet. Basierend auf der theoretischen Motordrehzahl n1 wird dann in Schritt S6-7 die benötigte theoretische elektrische Leistung PE1 berechnet. Für diese Umrechnungen können weitere Kennzahlen bzw. Kennlinien (nicht separat dargestellt) bereitgestellt werden.

Für die Berechnung, S6-8, des Drucks p aus der Differenz der theoretischen elektrischen Leistung PE1 des Pumpenmotors 3 und der erfassten elektrischen Leistung PE sind ebenfalls ein Umrechnungs- oder Multiplikationsfaktor 17-2 bzw. eine Kennlinie 17-2 vorgegeben.

Da es sich bei den vorhergehenden, detailliert beschriebenen Vorrichtung und Verfahren um Ausführungsbeispiele handelt, können sie in üblicher Weise vom Fachmann in einem weiten Umfang modifiziert werden, ohne den Bereich der Erfindung zu verlassen. Insbesondere kann die Anordnung des Sensors in anderer Form als in der hier beschriebenen erfolgen. Ebenso kann Festlegung der Kennwerte in einer anderen Form vorgenommen werden, wenn dies z.B. aus verfahrenstechnischen Gründen notwendig ist. Weiter schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 1: Heißgetränkezubereitungsvorrichtung
- 2: Pumpe
- 3: Pumpenmotor
- 4: Flüssigkeitsfluss
- 5: Sensor
- 6-1; 6-2: Versorgungsleitungen
- 7: Steuereinrichtung
- 8: Leitungselektronik
- 9: Kennwertspeicher
- 10: erste Kennwerte und/oder erste Kennlinien
- 11: Warnsignal
- 12: vorgegebener Schwellwert
- 14: Modell
- 15: zweite Kennwerte und/oder zweite Kennlinien
- 16: Recheneinheit
- 17-1; 17-2: Faktor

- p: Druck
- n, n1: Motordrehzahl
- PE, PE1: Motorleistung
- F: theoretischer Systemfluss
- B: Betriebsgröße

- S1 bis S6: Verfahrensschritte
- S4-1; S4-2: Verfahrensschritte
- S6-1 bis S6-8: Verfahrensschritte

## Patentansprüche

1. Heißgetränkezubereitungsvorrichtung (1), insbesondere Kaffeevollautomat,
- mit einer Pumpe (2), welche einen elektrischen Pumpenmotor (3) aufweist und dazu ausgebildet ist, in der Heißgetränkezubereitungsvorrichtung (1) eine Flüssigkeit zu pumpen;
- mit einem Sensor (5), welcher dazu ausgebildet ist, eine Betriebsgröße (B) des elektrischen Pumpenmotors (3) zu messen, welche eine Aussage über den von der Pumpe (2) erzeugten Flüssigkeitsfluss (4) ermöglicht;
- mit einer Steuereinrichtung (7), welche mit dem elektrischen Pumpenmotor (3) und dem Sensor (5) gekoppelt ist und welche dazu ausgebildet ist, den Flüssigkeitsfluss (4) basierend auf der erfassten Betriebsgröße (B) zu berechnen und den elektrischen Pumpenmotor (3) basierend auf dem berechneten Flüssigkeitsfluss (4) zu steuern; und
- mit einem Leistungssensor (5) als Sensor (5), welcher dazu ausgebildet ist, die durch den elektrischen Pumpenmotor (3) aufgenommene elektrische Leistung (PE) durch eine PWM- und eine Strommessung zu messen, oder
- mit einem Drehzahlsensor (5) als Sensor (5), welcher dazu ausgebildet ist, die Drehzahl (n) des elektrischen Pumpenmotors (3) basierend auf einem PWM-Tastverhältnis einer Steuerspannung des elektrischen Pumpenmotors (3) zu erfassen.

2. Heißgetränkezubereitungsvorrichtung (1) nach Anspruch 1, wobei die Steuereinrichtung (7) einen Kennwertspeicher (9) aufweist, welcher erste Kennwerte (10) und/oder erste Kennlinien (10) aufweist, welche die erfasste Betriebsgröße (B) zu dem Flüssigkeitsfluss (4) in der Heißgetränkezubereitungsvorrichtung (1) in Beziehung setzen.

3. Heißgetränkezubereitungsvorrichtung (1) nach Anspruch 2, wobei die Steuereinrichtung (7) dazu ausgebildet ist, basierend auf der erfassten Betriebsgröße (B) und den ersten Kennwerten (10) und/oder den ersten Kennlinien (10) den Flüssigkeitsfluss (4) in der Pumpe (2) zu bestimmen.

4. Heißgetränkezubereitungsvorrichtung (1) nach Anspruch 2 oder 3, wobei die Steuereinrichtung (7) dazu ausgebildet ist, basierend auf dem Flüssigkeitsfluss (4) in der Heißgetränkezubereitungsvorrichtung (1) den Druck (p) in der Heißgetränkezubereitungsvorrichtung (1) zu berechnen und die Heißgetränkezubereitungsvorrichtung (1), insbesondere Zubereitungszeiten und Zubereitungsparameter für eine Getränkezubereitung, basierend auf dem berechneten Druck (p) zu steuern.

5. Heißgetränkezubereitungsvorrichtung (1) nach Anspruch 4, wobei die Steuereinrichtung (7) dazu ausgebildet ist:
- basierend auf einem Modell (14) der Heißgetränkezubereitungsvorrichtung (1) und der durch den elektrischen Pumpenmotor (3) aufgenommenen elektrischen Leistung (PE) oder basierend auf dem Modell (14) der Heißgetränkezubereitungsvorrichtung (1) und der Drehzahl (n) des elektrischen Pumpenmotors (3) und insbesondere auf zweiten Kennwerten (15) und/oder zweiten Kennlinien (15) einen theoretischen Systemfluss in der Heißgetränkezubereitungsvorrichtung (1) zu berechnen,
- basierend auf der Differenz zwischen dem theoretischen Systemfluss und dem bestimmten Flüssigkeitsfluss (4) den Druck (p) in der Heißgetränkezubereitungsvorrichtung (1) zu berechnen.

6. Heißgetränkezubereitungsvorrichtung (1) nach einem der Ansprüche 4 oder 5, wobei die Steuereinrichtung (7) dazu ausgebildet ist:
- basierend auf einem Modell (14) der Heißgetränkezubereitungsvorrichtung (1) und dem bestimmten Flüssigkeitsfluss (4) in der Heißgetränkezubereitungsvorrichtung (1) eine theoretische Drehzahl und/oder eine theoretische elektrische Leistung des elektrischen Pumpenmotors (3) zu berechnen, und
- basierend auf der Differenz der theoretischen Drehzahl und der gemessenen Drehzahl (n) und/oder der theoretischen elektrischen Leistung und der gemessenen elektrischen Leistung (PE) des elektrischen Pumpenmotors (3) den Druck (p) in der Heißgetränkezubereitungsvorrichtung (1) zu berechnen.

7. Verfahren zum Betreiben einer Heißgetränkezubereitungsvorrichtung (1), insbesondere eines Kaffeevollautomaten, mit einer Pumpe (2), welche einen elektrischen Pumpenmotor (3) aufweist, mit den Schritten:
- Pumpen (S1) von Flüssigkeit (4) in der Heißgetränkezubereitungsvorrichtung (1) mit der Pumpe (2);
- Erfassen (S2) einer Betriebsgröße (B) des elektrischen Pumpenmotors (3), welche eine Aussage über den von der Pumpe (2) erzeugten Flüssigkeitsfluss (4) ermöglicht, durch einen Leistungssensor (5) als Sensor (5), welcher dazu ausgebildet ist, die durch den elektrischen Pumpenmotor (3) aufgenommene elektrische Leistung (PE) durch eine PWM- und eine Strommessung zu messen, oder durch einen Drehzahlsensor (5) als Sensor (5), welcher dazu ausgebildet ist, die Drehzahl (n) des elektrischen Pumpenmotors (3) basierend auf einem PWM-Tastverhältnis einer Steuerspannung des elektrischen Pumpenmotors (3) zu erfassen;
- Berechnen (S3) des Flüssigkeitsflusses (4) basierend auf der erfassten Betriebsgröße (B); und
- Steuern (S4) des elektrischen Pumpenmotors (3) basierend auf dem berechneten Flüssigkeitsfluss (4).

8. Verfahren nach Anspruch 7,
- wobei der Flüssigkeitsfluss (4) in der Pumpe (2) basierend auf der erfassten Betriebsgröße (B) und ersten Kennwerten (10) und/oder ersten Kennlinien (10) berechnet und insbesondere ein Warnsignal (11) ausgegeben wird (S5), wenn die Menge an Flüssigkeit in der Pumpe (2) unter einem vorgegebenen Schwellwert (12) liegt, und/oder
- wobei der Druck (p) in der Heißgetränkezubereitungsvorrichtung (1) basierend auf dem Flüssigkeitsfluss (4) in der Heißgetränkezubereitungsvorrichtung (1) berechnet wird (S6) und die Heißgetränkezubereitungsvorrichtung (1), insbesondere Zubereitungszeiten und Zubereitungsparameter für eine Getränkezubereitung, basierend auf dem berechneten Druck (p) gesteuert werden (S7).

## Claims

1. Hot beverage preparation device (1), in particular fully automatic coffee maker,
- having a pump (2) which has an electric pump motor (3) and is embodied to pump a liquid in the hot beverage preparation device (1);
- having a sensor (5) which is embodied to measure an operating parameter (B) of the electric pump motor (3) which makes it possible to provide a statement about the liquid flow (4) produced by the pump (2);
- having a control facility (7) which is coupled to the electric pump motor (3) and the sensor (5) and which is embodied to calculate the liquid flow (4) on the basis of the detected operating parameter (B) and to control the electric pump motor (3) on the basis of the calculated liquid flow (4); and
- having a power sensor (5) as a sensor (5) which is embodied to measure the electric power (PE) received by the electric pump motor (3) by means of a PWM and a current measurement, or
- having a speed sensor (5) as a sensor (5) which is embodied to detect the speed (n) of the electric pump motor (3) on the basis of a PWM duty factor of a control voltage of the electric pump motor (3).

2. Hot beverage preparation device (1) according to claim 1, wherein the control facility (7) has a characteristic value memory (9), which has first characteristic values (10) and/or first characteristic curves (10), which relate the detected operating parameter (B) to the liquid flow (4) in the hot beverage preparation device (1).

3. Hot beverage preparation device (1) according to claim 2, wherein the control facility (7) is embodied to determine the liquid flow (4) in the pump (2) on the basis of the detected operating parameter (B) and the first characteristic values (10) and/or the first characteristic curves (10).

4. Hot beverage preparation device (1) according to claim 2 or 3, wherein the control facility (7) is embodied to calculate the pressure (p) in the hot beverage preparation device (1) on the basis of the liquid flow (4) in the hot beverage preparation device (1) and to control the hot beverage preparation device (1), in particular preparation times and preparation parameters for a beverage preparation, on the basis of the calculated pressure (p).

5. Hot beverage preparation device (1) according to claim 4, wherein the control facility (7) is embodied:
- to calculate a theoretical system flow in the hot beverage preparation device (1) on the basis of a model (14) of the hot beverage preparation device (1) and the electric power (PE) received by the electric pump motor (3) or on the basis of the model (14) of the hot beverage preparation device (1) and the speed (n) of the electric pump motor (3) and in particular on the basis of the second characteristic values (15) and/or second characteristic curves (15),
- to calculate the pressure (p) in the hot beverage preparation device (1) on the basis of the difference between the theoretical system flow and the specific liquid flow (4).

6. Hot beverage preparation device (1) according to one of claims 4 or 5, wherein the control facility (7) is embodied:
- to calculate a theoretical speed and/or a theoretical electric power of the electric pump motor (3) on the basis of a model (14) of the hot beverage preparation device (1) and the specific liquid flow (4) in the hot beverage preparation device (1), and
- to calculate the pressure (p) in the hot beverage preparation device (1) on the basis of the difference of the theoretical speed and the measured speed (n) and/or the theoretical electric power and the measured electric power (PE) of the electric pump motor (3).

7. Method for operating a hot beverage preparation device (1), in particular a fully automatic coffee maker, with a pump (2), which has an electric pump motor (3), with the steps:
- pumping (S1) liquid (4) in the hot beverage preparation device (1) with the pump (2);
- detecting (S2) an operating parameter (B) of the electric pump motor (3), which makes it possible to provide a statement about the liquid flow (4) produced by the pump (2), by means of a power sensor (5) as a sensor (5) which is embodied to measure the electric power (PE) received by the electric pump motor (3) by means of a PWM and a current measurement, or by means of a speed sensor (5) as a sensor (5) which is embodied to detect the speed (n) of the electric pump motor (3) on the basis of a PWM duty factor of a control voltage of the electric pump motor (3);
- calculating (S3) the liquid flow (4) on the basis of the detected operating parameter (B); and
- controlling (S4) the electric pump motor (3) on the basis of the calculated liquid flow (4).

8. Method according to claim 7, - wherein the liquid flow (4) in the pump (2) is calculated on the basis of the detected operating parameter (B) and first characteristic values (10) and/or first characteristic curves (10) and in particular a warning signal (11) is output (S5) if the quantity of liquid in the pump (2) is below a predetermined threshold value (12), and/or
- wherein the pressure (p) in the hot beverage preparation device (1) is calculated (S6) on the basis of the liquid flow (4) in the hot beverage preparation device (1) and the hot beverage preparation device (1), in particular preparation times and preparation parameters for a beverage preparation, are controlled (S7)on the basis of the calculated pressure (p).

## Revendications

1. Dispositif de préparation de boissons chaudes (1), en particulier machine à café intégralement automatique,
- avec une pompe (2), qui présente un moteur de pompe électrique (3) et est exécutée afin de pomper un fluide dans le dispositif de préparation de boissons chaudes (1) ;
- avec un capteur (5) exécuté afin de mesurer une grandeur de fonctionnement (B) du moteur de pompe électrique (3), qui permet une indication quant au flux de fluide (4) généré par la pompe (2) ;
- avec un dispositif de commande (7) couplé au moteur de pompe électrique (3) et au capteur (5) et exécuté afin de calculer le flux de fluide (4) sur la base de la grandeur de fonctionnement (B) saisie et de commander le moteur de pompe électrique (3) sur la base du flux de fluide calculé (4) ; et
- avec un capteur de puissance (5) sous forme de capteur (5) exécuté afin de mesurer la puissance électrique (PE) absorbée par le moteur de pompe électrique (3) via une mesure de la modulation de largeur d'impulsion et une mesure du courant électrique, ou
- avec un capteur de vitesse de rotation (5) sous forme de capteur (5) exécuté afin de saisir la vitesse de rotation (n) du moteur de pompe électrique (3) sur la base d'un rapport impulsion/pause de la modulation de largeur d'impulsion d'une tension de commande du moteur de pompe électrique (3).

2. Dispositif de préparation de boissons chaudes (1) selon la revendication 1, dans lequel le dispositif de commande (7) présente une mémoire de paramètres caractéristiques (9), qui présente de premiers paramètres caractéristiques (10) et/ou de premières courbes caractéristiques (10), lesquels placent la grandeur de fonctionnement saisie (B) en relation avec le flux de fluide (4) dans le dispositif de préparation de boissons chaudes (1).

3. Dispositif de préparation de boissons chaudes (1) selon la revendication 2, dans lequel le dispositif de commande (7) est exécuté afin de déterminer le flux de fluide (4) dans la pompe (2) sur la base de la grandeur de fonctionnement saisie (B) et des premiers paramètres caractéristiques (10) et/ou des premières courbes caractéristiques (10).

4. Dispositif de préparation de boissons chaudes (1) selon la revendication 2 ou 3, dans lequel le dispositif de commande (7) est exécuté afin de calculer la pression (p) dans le dispositif de préparation de boissons chaudes sur la base du flux de fluide (4) dans le dispositif de préparation de boissons chaudes (1) et de commander le dispositif de préparation de boissons chaudes (1), en particulier les durées de préparation et paramètres de préparation pour une préparation de boisson sur la base de la pression (p) calculée.

5. Dispositif de préparation de boissons chaudes (1) selon la revendication 4, dans lequel le dispositif de commande (7) est exécuté :
- afin de calculer un flux de système dans le dispositif de préparation de boissons chaudes (1) sur la base d'un modèle (14) du dispositif de préparation de boissons chaudes (1) et de la puissance électrique (PE) absorbée par le moteur de pompe électrique (3) ou sur la base du modèle (14) du dispositif de préparation de boissons chaudes (1) et de la vitesse de rotation (n) du moteur de pompe électrique (3) et en particulier sur de deuxièmes paramètres caractéristiques (15) et/ou de deuxièmes courbes caractéristiques (15), de calculer la pression (p) dans le dispositif de préparation de boissons chaudes (1) sur la base de la différence entre le flux de système théorique et le flux de système déterminé (4).

6. Dispositif de préparation de boissons chaudes (1) selon l'une des revendications 4 ou 5, dans lequel le dispositif de commande (7) est exécuté :
- afin de calculer une vitesse de rotation théorique et/ou une puissance électrique théorique du moteur de pompe électrique (3) sur la base d'un modèle (14) du dispositif de préparation de boissons chaudes (1) et du flux de fluide (4) déterminé dans le dispositif de préparation de boissons chaudes (1), et
- afin de calculer la pression (p) dans le dispositif de préparation de boissons chaudes (1) sur la base de la différence entre la vitesse de rotation théorique et la vitesse de rotation mesurée (n) et/ou entre la puissance électrique théorique et la puissance électrique mesurée (PE) du moteur de pompe électrique (3).

7. Procédé d'exploitation d'un dispositif de préparation de boissons chaudes (1), en particulier d'une machine à café intégralement automatique, avec une pompe (2), qui présente un moteur de pompe électrique (3), comprenant les étapes suivantes :
- pompage (S1) de fluide (4) dans le dispositif de préparation de boissons chaudes (1) avec la pompe (2) ;
- saisie (S2) d'une grandeur de fonctionnement (B) du moteur de pompe électrique (3), permettant une indication quant au flux de fluide (4) généré par la pompe (2), à travers un capteur de puissance (5) sous forme de capteur (5) exécuté afin de mesurer la puissance électrique (PE) absorbée par le moteur de pompe électrique (3) via une mesure de la modulation de largeur d'impulsion et une mesure du courant électrique, ou à travers un capteur de vitesse de rotation (5) sous forme de capteur (5) exécuté afin de saisir la vitesse de rotation (n) du moteur de pompe électrique (3) sur la base d'un rapport impulsion/pause de la modulation de largeur d'impulsion d'une tension de commande du moteur de pompe électrique (3) ;
- calcul (S3) du flux de fluide (4) sur la base de la grandeur de fonctionnement (B) saisie ; et
- commande (S4) du moteur de pompe électrique (3) sur la base du flux de fluide calculé (4).

8. Procédé selon la revendication 7,
- dans lequel le flux de fluide (4) dans la pompe (2) est calculé sur la base de la grandeur de fonctionnement (B) saisie et des premiers paramètres caractéristiques (10) et/ou des premières courbes caractéristiques (10) et un signal d'avertissement (11) est en particulier émis (S5) lorsque la quantité de fluide dans la pompe (2) se trouve en-deçà d'une valeur seuil (12) prédéfinie, et/ou
- dans lequel la pression (p) dans le dispositif de préparation de boissons chaudes (1) est calculée (S6) sur la base du flux de fluide (4) dans le dispositif de préparation de boissons chaudes (1) et le dispositif de préparation de boissons chaudes (1), en particulier les durées de préparation et paramètres de préparation pour une préparation de boisson sont commandés sur la base de la pression (p) calculée.
